# EUROPEAN PATENT SPECIFICATION

(11) **EP 1 512 719 B1**
(45) Date of publication and mention of the grant of the patent: **08.10.2008**
(21) Application number: 03019364.3
(22) Date of filing: 27.08.2003
(51) Int. Cl.: C08L 23/08

(54) **Flame retardant polymer composition comprising fine particles**
Flammengeschützte Polymermischung mit feinen Partikeln
Composition polymérique retardateur de flamme comprenant des particules fines

(43) Date of publication of application: 09.03.2005
(73) Proprietor: Borealis Technology Oy, 06101 Porvoo (FI)
(72) Inventor: Jungkvist, Jonas, 414 70 Göteborg (SE); Sultan, Bernt-Ake, 444 42 Stenungsund (SE)
(74) Representative: Kador & Partner

(56) References cited:
- EP-A- 0 393 959
- EP-A- 1 188 793

## Description

The present invention relates to a flame retardant polymer composition, more particularly to a flame retardant polymer composition for wires or cables which shows improved flame retardant properties while retaining other properties such as good extrudability or a good balance between flexibility and stiffness. Furthermore, the present invention relates to the use of the flame retardant polymer composition for the production of a flame retardant layer in wires or cables as well as to a wire or cable comprising a flame retardant composition according to the invention.

Polyolefins are inherently combustible materials. However, in many applications flame resistance is required such as for cables and wires in the Electronics and Electrical industries. To obtain polyolefin polymers with improved flame resistance it is known to incorporate specific additives into the polymer, such as halogen based chemicals, phosphate based chemicals or inorganic hydroxide/hydrated compounds. Each of these additives have their own deficiencies, such as incompatibility with the polyolefin, the need for high loading levels leading to poor mechanical properties and poor processability, the presence or emission of harmful, toxic or otherwise undesirable compounds and high costs.

For example, as disclosed in EP 0 393 959 or WO 98/12253, a flame retardant polymer composition may comprise a silicon-group containing compound, an inorganic filler which is neither a hydroxide nor a substantially hydrated compound and an organic polymer matrix typically comprising an acrylate or acetate. The flame retardancy of such compositions is based on synergistic effects between these three components which in case of burning lead to the formation of a physically and firmly stable char layer that protects the polymer from further burning. Compounds based on such compositions usually show good flame retardancy, e.g in the limiting oxygen index (LOI) test method according to ISO 4589-A-IV. Sheathed cables and larger conduit (unsheathed) cables also have to fulfil specific cable test, as e.g. the single-wire burning test according to IEC 332-1. Conduit wires are, however, most commonly small and wires smaller than 4 mm² based on such compositions have difficulties in fulfilling IEC 332-1. Hence, the flame retardancy of such compositions can still be improved.

EP-A-1188793 discloses a flame-retardant polycarbonate resin composition and molded article comprising a resin mixture of (A) from 60 to 99 % by mass of a polycarbonate resin and (B) from 1 to 40 % by mass of a polycarbonate copolymer having phosphorus atoms in its main chain and contains (C) from 0.02 to 5 parts by mass relative to 100 parts by mass of the resin mixture of an anti-dripping agent. With such a resin composition high-quality mouldings having good appearance can be obtained.

It is therefore an object of the present invention to provide a flame retardant polymer composition which is having an improved flame retardancy while retaining good mechanical properties, especially a good balance between flexibility and stiffness.

The present invention is based on the finding that this object can be achieved by a polymer composition according to claim 1.

The present invention provides therefore a flame retardant polymer composition comprising
(A) an olefin homo- and/or copolymer in an amount of from 30 to 70 wt% of the total polymer composition,
(B) a silicone-group containing compound,
(C) an inorganic filler which is neither a hydroxide nor a hydrated compound in an amount of at least 10 wt.-% of the total polymer composition,
wherein component (C) has a particle size distribution so that at least 10 wt.% of the total polymer composition are particles with a size of below 0.5 micrometers.

The inventive composition shows improved flame retardancy compared to prior art materials, as it passes the single-wire burning test and shows improved dripping properties. Furthermore, the composition on decomposition does deliberate less hazardous and no corrosive gases.

The purpose of the test method IEC 332-1 is to determine the resistance to flame propagation for single vertical cables. The cable (600 mm) is installed in a vertical position and a 1 kW flame produced by a propane burner is applied onto the cable sample at a 45° angle 475 mm from the upper support of the cable. The distance between the lower and upper support should be 550 mm. For cables having an outer diameter of less than 25 mm the flame is applied for 60 seconds. In order to fulfil the test, the flame should extinguish after the propane burner flame has been taken away and no charring should be visible within 50 mm from the upper support and below 540 mm.

In the composition according to the invention, the choice and the composition of polymer (A) may vary, depending on whether the inventive composition is used as a layer for wires or cables and depending on for what purpose the layer is used. Of course, polymer (A) may also comprise a mixture of different polymers.

Suitable polymers for forming component (A) include polyolefins, polyesters, polyethers and polyurethanes. Elastomeric polymers may also be used such as, for example, ethylene/propylene rubber (EPR), ethylene/propylene-diene monomer rubbers (EPDN), thermoplastic elastomer rubber (TPE), acrylonitrile butadiene rubber (NBR) and acrylnitril-butadienestyrene (ABS). Silane-crosslinkable polymers may also be used, i.e. polymers prepared using unsaturated silane monomers having hydrolysable groups capable of crosslinking by hydrolysis and condensation to form silanol groups in the presence of water and, optionally, a silanol condensation catalyst.

In a preferred embodiment component (A) is essentially formed by olefin, preferably ethylene, homo- or copolymers. These include, for example, homopolymers or copolymers of ethylene, propylene and butene and polymers of butadiene or isoprene. Suitable homopolymers and copolymers of ethylene include low density polyethylene, linear low, medium or high density polyethylene and very low density polyethylene. Suitable ethylene copolymers include such with of C₃- to C₂₀-alpha-olefins, C₁- to C₆- alkyl acrylates, C₁- to C₆- alkyl methacrylates, acrylic acids, methacrylic acids and vinyl acetates. Preferred examples for the alkyl alpha-olefins are propylene, 1-butene, 4-methyl-1-pentene, 1-hexene and 1-octene.

In a further preferred embodiment of the inventive composition component (A) comprises an olefin copolymer, preferably a polar olefin copolymer.

Polar groups are defined to be functional groups which comprise at least one element other that carbon and hydrogen.

Further preferred, the polar copolymer is an olefin/acrylate, preferably ethylene/acrylate, and/or olefin/acetate, preferably ethylene/acetate, copolymer.

It is further preferred that the polar copolymer comprises a copolymer of an olefin, preferably ethylene, with one or more comonomers selected from C₁- to C₆-alkyl acrylates, C₁- to C₆-alkyl methacrylates, acrylic acids, methacrylic acids and vinyl acetate. The copolymer may also contain ionomeric structures (like in e.g. DuPont's Surlyn types).

Further preferred, the polar polymer comprises a copolymer of ethylene with C₁- to C₄-alkyl, such as methyl, ethyl, propyl or butyl, acrylates or vinylacetate.

It is particularly preferred that the polar polymer comprises a copolymer of an olefin, perferably ethylene, with an acrylic copolymer, such as ethylene acrylic acid copolymer and ethylene methacrylic acid copolymer.

In addition to ethylene and the defined comonomers, the copolymers may also contain further monomers. For example, terpolymers between acrylates and acrylic acid or methacrylic acid, or acrylates with vinyl silanes, or acrylates with siloxane, or acrylic acid with siloxane may be used.

The polar copolymer may be produced by copolymerisation of the polymer, e.g. olefin, monomers with polar comonomers but may also be a grafted polymer, e.g. a polyolefin in which one or more of the comonomers is grafted onto the polymer backbone, as for example acrylic acid-grafted polyethylene.

It is further preferred that the polar polymer makes up an amount of 30 parts by weight (pbw) or more, more preferred of 50 pbw or more, and still more preferred of 70 pbw or more, per 100 pbw of component (A).

Polymer component (A) is present in the composition in an amount of 30 to 70 wt%, preferably from 40 to 60 wt% of the total composition.

The inventive flame retardant composition further comprises a silicone-group containing compound (B).

In a preferred embodiment of the inventive composition, component (B) is a silicone fluid or a gum, or an olefin, preferably ethylene, copolymer comprising at least one silicone-group containing comonomer, or a mixture of any of these compounds. Preferably, said comonomer is a vinylpolysiloxane, as e.g. a vinyl unsaturated polybishydrocarbylsiloxane.

Silicone fluids and gums suitable for use in the present inventions are known and include for example organopolysiloxane polymers comprising chemically combined siloxy units selected from the group consisting of R₃SiO_{0.5}, R₂SiO, R¹SiO₁.₅, R¹R₂SiO_{0.5}, RR¹SiO, R¹₂SiO, RSiO_{1.5} and SiO₂ units and mixtures thereof in which each R represents independently a saturated or unsaturated monovalent hydrocarbon radical and each R¹ represents a radical such as R or a radical selected from the group consisting of hydrogen, hydroxyl, alkoxy, aryl, vinyl or allyl radicals.

The organopolysiloxane preferably has a number average molecular weight Mₙ of approximately 10 to 10,000,000. The molecular weight distribution (MWD) measurements were performed using GPC. CHCl₃ was used as a solvent. Shodex-Mikrostyragel (10⁵, 10⁴, 10³, 100 Å) column set, RI-detector and a NMWD polystyrene calibration were used. The GPC tests were performed at room temperature.

The silicone fluid or gum can contain fumed silica fillers of the type commonly used to stiffen silicone rubbers, e.g. up to 50% by weight.

Copolymers of an olefin, preferably ethylene, and at least one silicone-group containing comonomer preferably are a vinyl unsaturated polybis-hydrocarbylsiloxanes according to formula (I): 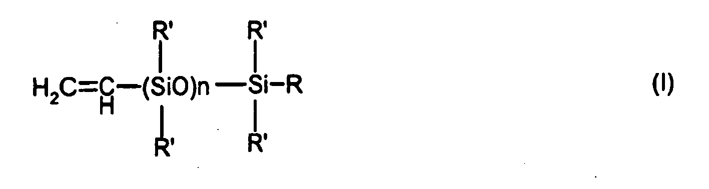 wherein n = 1 to 1000 and
R and R' independently are vinyl, alkyl branched or unbranched, with 1 to 10 carbon atoms; aryl with 6 or 10 carbon atoms; alkyl aryl with 7 to 10 carbon atoms; or aryl alkyl with 7 to 10 carbon atoms.

Such compounds e.g. are disclosed in WO 98/12253.

Preferably, component (B) is polydimethylsiloxane, preferably having a Mₙ of approximately 1,000 to 1,000,000, more preferably of 200,000 to 400,000, and/or a copolymer of ethylene and vinyl polydimethylsiloxane. These components (B) are preferred due to commercial availability.

The term "copolymer" as used herein is meant to include copolymers produced by copolymerization or by grafting of monomers onto a polymer backbone.

It is preferred that silicone-group containing compound (B) is present in the composition in an amount of 0.5 to 40 %, more preferred 0.5 to 10 % and still more preferred 1 to 5 % by weight of the total composition.

Inorganic filler component (C) has a particle size distribution so that at least 10 wt.% , more preferably at least 15 wt.% of the of the total polymer composition are particles with a size of below 0.5 micrometer.

Further preferred, component (C) has a particle size distribution so that at most 55 wt.%, more preferred at most 45 wt.%, still more preferred at most 30 wt.% of the total polymer composition are particles with a size of below 0.7 micrometer, more preferred 0.65 micrometer or less, still more preferred 0.60 micrometer or less and most preferred below 0.5 micrometer.

It is furthermore preferred that component (C) has a particle size distribution so that at least 50 wt.% of the particles have a size of below 0.7 micrometer, more preferred of 0.65 micrometer or less, still more preferred of 0.60 micrometer or less and most preferred of below 0.5 micormeter.

Furthermore, it is preferred that at least 60 wt% of the particles of component (C) have a particle size of 1 micrometer or below, further preferred at least 70 wt.% of the particles have a size of 1.5 micrometer or below, and still further preferred at least 80 wt% of the particles have a size of 2 micrometer or below.

In case inorganic filler particles are used having an aspect ratio, i.e. the ratio between the widest and the shortest dimension of the particles, deviating from 1, the particle size is defined to be the numerical average of the widest and shortest dimensions of the particle.

Preferably, the inorganic filler (C) comprises at least one type of filler, wherein the aspect ratio of the inorganic filler particles, i.e. the ratio between the widest and shortest dimension of the particles is below 5.

For example, CaCO₃ particles usually have an aspect ratio of close to 1, e.g. of 1 to 2.

It is within the scope of the invention that only one type or a mixture of two or more types of inorganic fillers are used with all filler particles having the same aspect ratio.

Inorganic filler (C) may, accordingly, consist completely of fillers having a particle aspect ratio below 5.

In a preferred embodiment, the inorganic filler (C) comprises a mixture between at least two types of fillers, with one type having particles with an aspect ratio of below 5, and one type having an aspect ratio of 5 or higher.

For example, fibres typically have a particle aspect ratio of 10 and higher, platelet type of fillers like mica, talk, Al-hydroxide and graphite have typically a particle aspect ratio of 5 to 100.

It is preferred that inorganic filler (C) is present in the composition in an amount of more than 10 wt%, more preferred of 30 wt% or more, still more prefered of 32 wt% or more, still more preferred 34 wt% or more, and most preferred of 35 wt% or more.

It is further preferred that inorganic filler (C) is present in the composition in an amount up to 70 wt%, more preferably of up to 60 wt% and most preferably of up to 55 wt%.

Component (C), i.e. the inorganic filler material suitable for use in the inventive composition, comprises all filler materials as known in the art.

Component (C) may also comprise a mixture of any such filler materials. Examples for such filler materials are oxides, hydroxides and carbonates of aluminium, magnesium, calcium and/or barium.

Preferably, component (C) comprises an inorganic compound of a metal of groups 1 to 13, more preferred groups 1 to 3, still more preferred groups 1 and 2 and most preferred group 2, of the Periodic Table of Elements.

The numbering of chemical groups, as used herein, is in accordance with the IUPAC system in which the groups of the periodic system of the elements are numbered from 1 to 18.

Inorganic filler component (C) comprises a compound which is neither a hydroxide, nor a hydrated compound, preferably comprises a compound selected from carbonates, oxides and sulphates, and most preferred comprises a carbonate.

Preferred examples of such compounds are calcium carbonate, magnesium oxide and huntite Mg₃Ca(CO₃)₄, with a particular preferred example being calcium carbonate.

Although inorganic filler (C) is not a hydroxide, it may contain small amounts of hydroxide typically less than 5% by weight of the filler, preferably less than 3% by weight. For example there may be small amounts of magnesium hydroxide in magnesium oxide. Furthermore, although filler (C) is not a hydrated compound, it may contain small amounts of water, usually less than 3% by weight of the filler, preferably less than 1% by weight. However, it is most preferred that component (C) is completely free of hydroxide and/or water.

Preferably, component (C) of the inventive flame retardant polymer composition comprises 50 wt% or more of calcium carbonate and further preferred is substantially made up completely of calcium carbonate.

The inorganic filler may comprise a filler which has been surface-treated with an organosilane, a polymer, a carboxylic acid or salt to aid processing and provide better dispersion of the filler in the organic polymer. Such coatings usually do not make up more than 3 wt.% of the filler.

Preferably, the compositions according to the present invention contain less than 3 wt.% of organo-metallic salt or polymer coatings.

In addition to the above-mentioned components (A), (B) and (C), the composition according to the present invention may contain further ingredients, such as for example antioxidants and or UV stabilizers, in small amounts.

Furthermore, also other mineral fillers such as glass fibres may be part of the composition.

The compositions according to the present invention may be cross-linkable. It is well known to cross-link thermoplastic polymer compositions using irradiation or cross-linking agents such as organic peroxides and thus the compositions according to the present invention may contain a cross-linking agent in a conventional amount. Silane cross-linkable polymers may contain a silanol condensation catalyst.

The flame retardant polymer composition according to the invention may be prepared by
a) preparation of a master batch comprising the silicone-group containing compound, additives and polymer followed by compounding with inorganic filler and matrix polymer or
b) one step compounding of all components.

For mixing, a conventional compounding or blending apparatus, e.g. a Banbury mixer, a 2-roll rubber mill, Buss-co-kneader or a twin screw extruder may be used. Preferably, the composition will be prepared by blending them together at a temperature which is sufficiently high to soften and plasticise the polymer, typically a temperature in the range of 120 to 200 °C.

The flame retardant composition according to the present invention can be used in many and diverse applications and products. The composition can for example be moulded, extruded or otherwise formed into mouldings, sheets, webbings and fibres.

As already mentioned above a preferred use of the flame retardant composition according to the present invention is for the manufacture of conduits, plugs, wires or cables or for injection moulding, with a particularly preferred use being the manufacture of wires or cables. The composition can be extruded about a wire or cable to form an insulating or jacketing layer or can be used as a bedding compound.

In the following the present invention is further illustrated by means of examples and the following figure:

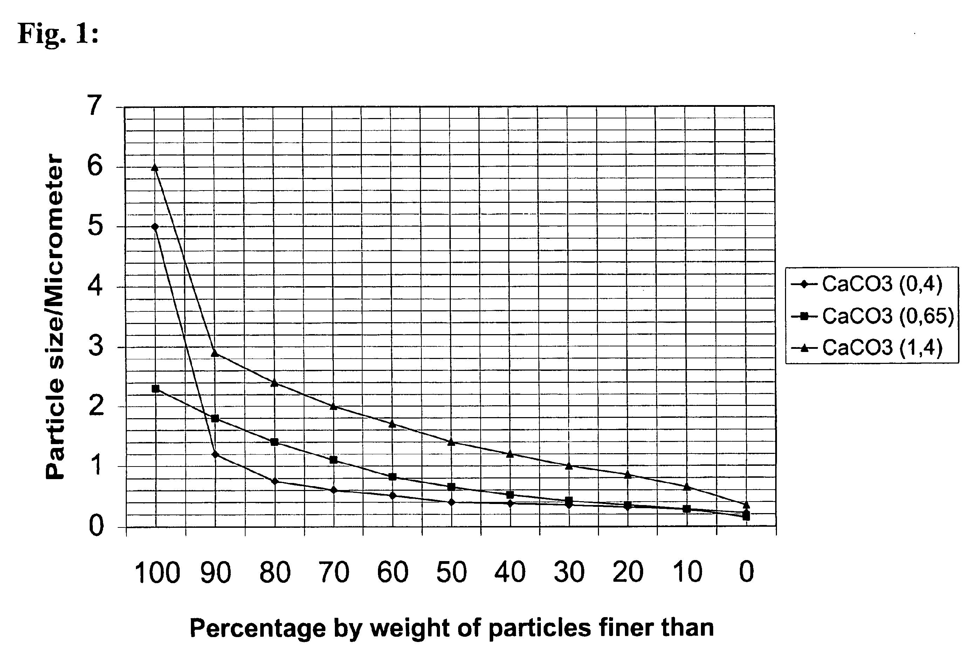

Fig. 1 shows the particle size distribution of the inorganic CaCO₃ filler materials used in the Examples.

### Examples:

### 1. Compounding of compositions

Flame retardant polymer compositions according to the invention and for comparative purpose were produced by compounding together the components in a roller mill at a temperature of 180°C.

### 2. Produced compositions and materials used

For the production of the comparative compositions and the compositions in accordance with the invention, the following materials were used:

| | |
|---|---|
| EMAA = | Ethylene methacrylic acid copolymer containing 9 wt% of methacrylic acid, having a melt flow rate at 190 °C, 2.16 kg (MRF₂) of 3.0 g/10min and a density of 0.934 g/cm³; |
| EAA = | Ethylene acrylic acid copolymer containing 9 wt.% of acrylic acid, having a MFR₂ of 8 g/10min, and a density of 0.936 g/cm³; |
| EBA = | Ethylene butyl acrylate copolymer containing 8 wt.% of butyl acrylate, and having an MFR₂ of 0.4 g/10 min. |
| Silicone (m.b.) = | Masterbatch, consisting of 40% polydimethylsilicone elastomer and 60% low-density polyethylene, |
| CaCO₃ (0.4) = | Precipitated calcium carbonate having an average particle size (d₅₀-value) of 0.4 microns, |
| CaCO₃ (0.65) = | Ground calcium carbonate having an average particle size (d₅₀-value) of 0.65 microns, |
| CaCO₃ (1.4) = | Ground calcium carbonate having an average particle size (d₅₀-value) of 1.4 microns, |
| Stabilizer = | Irganox 1010 (phenolic antioxidant). |

The compositions were compounded as indicated above with amounts given in wt% of the components as indicated in Table 1.

### 3. Production of cables

0.7 +/- 0.1 mm insulation of the different compositions outlined in Table 1 was extruded onto 1.5 mm² copper conductor on a laboratory extrusion line (160-170-180°C, rpm, pressure die).

### 4. Test methods

a) The melt flow rate MFR₂ of the composition was measured in accordance with ISO 1133 at 190°C and a weight of 2.16 kg.
b) The single wire burning test was done in full accordance with IEC 332-1. In order to fulfil the test the flame should extinguish after the flame from the 1 kW propane burner has been taken away and no charring should be visible within 50 mm from the upper support and below 540 mm. A wire fulfilling this criterium was marked "pass" in Table 1, otherwise it was marked "fail".
c) The dripping tendency of the materials was determined in the following way:
   A 60x60x3 mm³ plaque is pressed of the material and put on a steel frame having a mesh size of 12. The plaque is burned from below at an angle of 45° through the steel frame by a 1 kW Bunsen burner (950+/-50°C) until the fire distinguish by itself (plaque completely burned). The burning drops fall down in water. The residues in the water are filtered, dried and weighed. The dripping tendencies are expressed as the residue collected in water divided by the original weight of the plaque multiplied by 100. l.e. percent of the original sample weight that has been lost due to dripping. The method is based on the French method NF P 92-505.
d) The particle size distribution and average particle size (d₅₀-value) was determined with a Sedigraph 5100. This sedimentation method determines particle size by measuring the gravity-induced travel rates of different size particles in a liquid with known properties. The rate at which particles fall through the liquid is described by Stokes' Law. The largest particles fall fastest, while the smallest particles fall slowest, until all have settled and the liquid is clear. Since different particles rarely exhibit a uniform shape, each particle size is reported as an "Equivalent Spherical Diameter", the diameter of a sphere of the same material with the same gravitational speed.
   Sedimentation rate is measured by using a finely collimated beam of low energy X-rays which pass through the sample cell to a detector. Since the particles in the cell absorb X-rays, only a percentage of the original X-ray beam reaches the detector. This is the raw data used to determine the distribution of particle sizes in a cell containing sedimentation liquid.
   The X-ray source and detector assembly remain stationary, while the cell moves vertically between them. Due to the beam split feature, automatic cell positioning is guaranteed, eliminating the uncertainty associated with other systems due to their movement of the assembly. The cell contains a transparent window through which X-rays from the source reach the detector. The distribution of particle mass at various points in the cell affects the number of X-ray pulses reaching the detector. This X-ray pulse count is used to derive the particle diameter distribution and the percent mass at given particle diameters. The average particle size is defined as the particle size when 50 weight-% of the material is finer and 50 weight-% of the material is coarser.
*

### 5. Results

A comparison between the properties of the compositions according to the invention (Examples 3 to 6, 8 and 9) and comparative compositions (Comparative Examples 1, 2, 7 and 10 to 14) as given in Table 1 shows that cables made from the inventive compositions pass the single wire burning test and thus have improved flame retardancy.

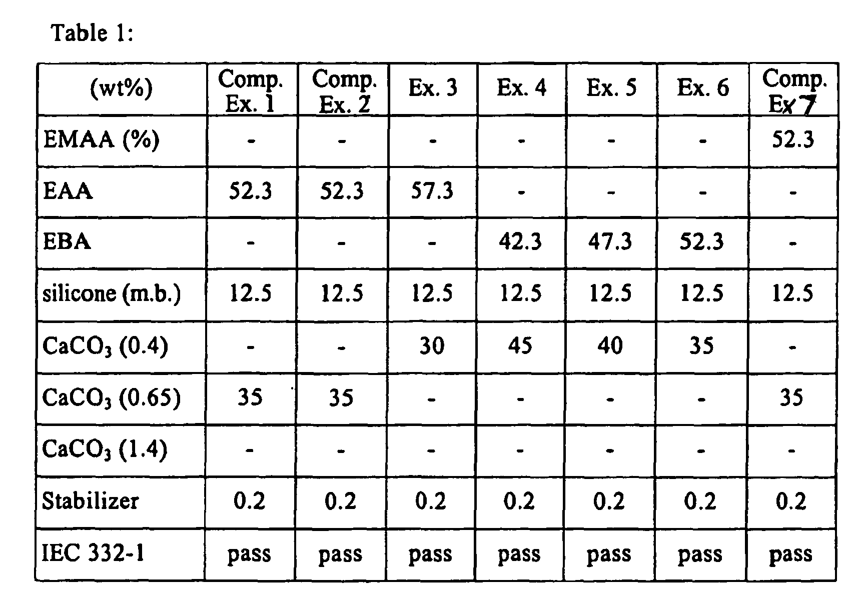

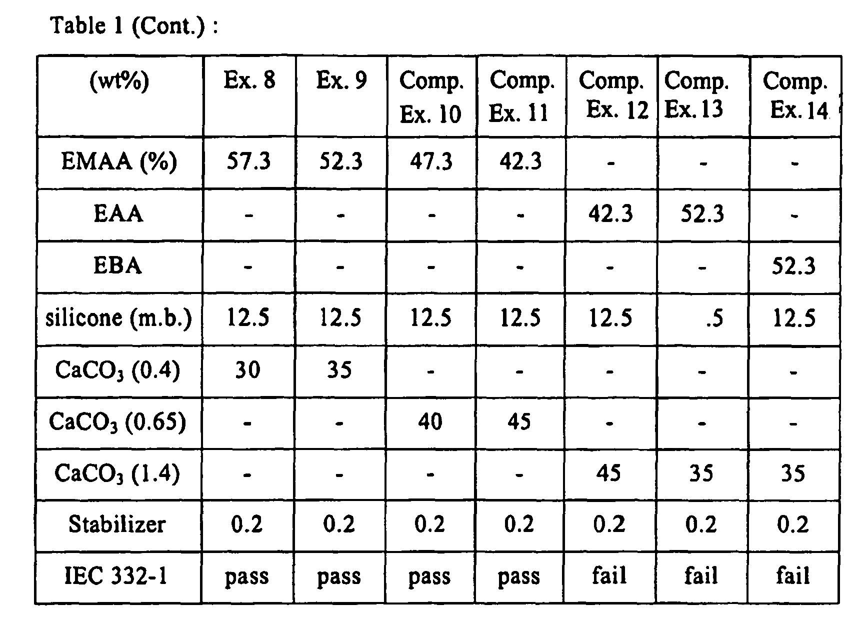

Furthermore, the results shown in Table 2 show that the inventive compositions have an improved dripping tendency. The compounds tested all contained 12.5 wt% of silicone (m.b.), 0.2 wt% of stabilizer, the amount and quality of CaCO₃ as indicated in Table 2 and the remainder being EBA.

**Table 2:**

| Average particle size | 30% CaCO₃ | 35% CaCO₃ | 40% CaCO₃ |
|---|---|---|---|
| 0.4 micron | 12 | 9 | 2 |
| 0.65 micron | 8 | 1 | 2 |
| 1.4 micron | 33 | 8 | 12 |

## Claims

1. A flame retardant polymer composition comprising
(A) an olefin homo- and/or copolymer in an amount of from 30 to 70 wt.-% of the total polymer composition,
(B) a silicone-group containing compound,
(C) an inorganic filler which is neither a hydroxide nor a hydrated compound in an amount of at least 10 wt% of the total polymer composition,
wherein component (C) has a particle size distribution so that at least 10 wt% of the total polymer composition are particles with a size of below 0.5 micrometers.

2. Composition according to claim 1 wherein the total amount of inorganic filler (C) is from 30 to 55 wt% of the total polymer composition.

3. Composition according to claim 1 or 2 wherein inorganic filler (C) comprises a carbonate, oxide and/or sulphate of an element of groups 1 to 13 of the Periodic System of the Elements.

4. Composition according to any of the preceding claims wherein component (C) comprises an inorganic compound having particles with an aspect ratio of below 5.

5. Composition according to any of the preceding claims wherein polymer (A) comprises a polar olefin copolymer.

6. Composition according to claim 5 wherein polymer (A) comprises a copolymer of an olefin with an acrylic comonomer.

7. Composition according to any of the preceding claims wherein silicone-group containing compound (B) is a silicone fluid and/or gum, and/or an olefin copolymer comprising a silicone-group containing comonomer.

8. Use of a composition according to any of the preceding claims in a conduit, plug, wire or cable or for injection moulding, preferably in a wire or cable.

9. A wire or cable having a layer comprising a composition according to any of claims 1 to 7.

## Patentansprüche

1. Flammgeschützte Polymerzusammensetzung, umfassend:
(A) ein Olefinhomo- und/oder -copolymer in einer Menge von 30 bis 70 Gew.-% der gesamten Polymerzusammensetzung,
(B) eine Silicongruppen enthaltende Verbindung;
(C) einen anorganischen Füllstoff, der weder ein Hydroxid noch eine hydratisierte Verbindung ist, in einer Menge von mindestens 10 Gew.-% der gesamten Polymerzusammensetzung,
wobei die Komponente (C) eine solche Partikelgrößenverteilung aufweist, daß mindestens 10 Gew.-% der gesamten Polymerzusammensetzung Partikel mit einer Größe von weniger als 0,5 µm sind.

2. Zusammensetzung nach Anspruch 1, wobei die Gesamtmenge des anorganischen Füllstoffs (C) 30 bis 55 Gew.-% der gesamten Polymerzusammensetzung beträgt.

3. Zusammensetzung nach Anspruch 1 oder 2, wobei der anorganische Füllstoff (C) ein Carbonat, Oxid und/oder Sulfat eines Elementes der Gruppen 1 bis 13 des Periodensystems der Elemente umfaßt.

4. Zusammensetzung nach einem der vorstehenden Ansprüche, wobei die Komponente (C) eine anorganische Verbindung mit Partikeln mit einem Seitenverhältnis von weniger als 5 umfaßt.

5. Zusammensetzung nach einem der vorstehenden Ansprüche, wobei das Polymer (A) ein polares Olefincopolymer umfaßt.

6. Zusammensetzung nach Anspruch 5, wobei das Polymer (A) ein Copolymer eines Olefins mit einem Acrylcomonomer umfaßt.

7. Zusammensetzung nach einem der vorstehenden Ansprüche, wobei die Silicongruppen enthaltende Verbindung (B) ein Siliconfluid und/oder -kautschuk und/oder ein Olefincopolymer ist, das ein Silicongruppen enthaltendes Comonomer umfaßt.

8. Verwendung einer Zusammensetzung nach einem der vorstehenden Ansprüche in einer Leitung, einem Stopfen, einem Draht oder einem Kabel oder für das Spritzgießen, vorzugsweise in einem Draht oder Kabel.

9. Draht oder Kabel, der bzw. das eine Schicht aufweist, die eine Zusammensetzung nach einem der Ansprüche 1 bis 7 umfaßt.

## Revendications

1. Composition polymère ignifuge comprenant
(A) un homo- et/ou copolymère d'oléfines en une quantité de 30 % à 70 % en poids de la composition polymère totale,
(B) un composé contenant un groupe silicone
(C) une charge inorganique qui n'est ni un hydroxyde ni un composé hydraté en une quantité d'au moins 10 % en poids de la composition polymère totale,
où le composant (C) a une répartition de taille de particule de sorte qu'au moins 10 % en poids de la composition polymère totale soient des particules d'une taille inférieure à 0,5 micromètres.

2. Composition selon la revendication 1, dans laquelle la quantité totale de charge inorganique (C) est de 30 % à 55 % en poids de la composition polymère totale.

3. Composition selon la revendication 1 ou 2, dans laquelle la charge inorganique (C) comprend un carbonate, un oxyde et/ou un sulfate d'un élément des groupes 1 à 13 du système périodique des éléments.

4. Composition selon l'une quelconque des revendications précédentes, dans laquelle le composant (C) comprend un composé inorganique ayant des particules avec un rapport d'aspect inférieur à 5.

5. Composition selon l'une quelconque des revendications précédentes, dans laquelle le polymère (A) comprend un copolymère d'oléfines polaires.

6. Composition selon la revendication 5, dans laquelle le polymère (A) comprend un copolymère d'une oléfine avec un comonomère acrylique.

7. Composition selon l'une quelconque des revendications précédentes, dans laquelle le composé contenant un groupe silicone (B) est un fluide et/ou une gomme de silicone, et/ou un copolymère d'oléfines comprenant un comonomère contenant un groupe silicone.

8. Utilisation d'une composition selon l'une quelconque des revendications précédentes dans une conduite, une fiche, un fil ou un câble ou pour un moulage par injection, de préférence dans un fil ou un câble.

9. Fil ou câble ayant une couche comprenant une composition selon l'une quelconque des revendications 1 à 7.
